# EUROPEAN PATENT APPLICATION

(11) **EP 1 321 658 A1**
(43) Date of publication of application: **25.06.2003**
(21) Application number: 01830774.4
(22) Date of filing: 18.12.2001
(51) Int. Cl.: F02M 27/04, F02D 19/06, F02D 23/02, F02B 37/18

(54) **Kit for diesel motor**

(71) Applicant: Parisi, Guido, 10155 Torino (IT)
(72) Inventor: Parisi, Guido, 10155 Torino (IT)
(74) Representative: Robba, Pierpaolo

(57) **Abstract**

A kit for Diesel motor comprising a main gas oil supply line (37), said kit comprising a first group of components (1) able to be inserted into said main supply line, a second group of components (2a-2b) allowing to realise a first additional gas oil supply line (39), and a third group of components (3) allowing to realise a second additional supply line (47) of combustible gas.

## Description

The present invention refers to a kit for Diesel motors.

More precisely, the invention concerns a kit for an internal combustion Diesel-cycle motor, comprising groups of components that can be selectively activated for improving the performance, decreasing the consumption and bringing down the polluting emissions of the motor itself.

It is known that nowadays one of the biggest environmental concerns is related with the pollution caused by the emissions of the internal combustion motors. About this topic, many motor-makers are investing considerable capital for the development and the research of motors working with alternative fuels that pollute little.

In the field of the car industry, for instance, alternative fuels like liquefied petroleum gas (LPG) and methane have proved to be extremely topical. It is known that, for decreasing the pollution caused by the air emissions of the vehicles, many cities have undertaken to supply a considerable number of their own fleets of public transport with methane, that is to say to transform the Diesel motors of the public transport into motors working with methane. However, said transformations require complex and expensive structural modifications to the motor, like for instance the insertion of spark-plugs and battery ignitions, and variations in the injection and ignition systems. Besides, once said motors have been transformed, in any case they only work with one single fuel, that is only with methane.

It is an object of the present invention to provide a kit for Diesel motor that can be easily mounted and that allows to decrease consumption, to improve performance and to emit a lower quantity of gases harmful to the environment, by exploiting the synergic effect of additional alternative fuels and of specific devices.

This and other objects are obtained by means of a kit for Diesel motor as claimed in the hereby attached claims.

In case the kit according to the invention is applied to a Diesel motor of a vehicle, the driver can advantageously choose the driving style more suitable to the road and traffic conditions. In fact, according to the invention, the driver can activate a selector located inside the driver's compartment allowing to choose among three different driving modalities, that is to say:
- a modality "economic", allowing to substantially decrease consumption;
- a modality "performance", increasing the motor's performance while keeping consumption under control at the same time;
- an modality "extra", allowing to obtain maximum performance.

Advantageously, in all said three driving modalities, a substantial decrease of the polluting emissions of the motor itself with respect to the emissions of the standard motor as declared by the car-maker company occurs.

The whole kit provides for the application to the motor of three different groups of components, the simultaneous use of which corresponds with the driving modality "extra". However, it is also possible to apply to the motor only one or only two groups of components.

According to the invention, besides the normal use of gas oil for supplying the motor, it is further provided the use of a combustible gas having high caloric contribution, like for instance LPG.

The use of LPG is advantageous under at least two aspects: on the one side, it does not contain the high levels of aromatic hydrocarbons characterising the current petrols and is therefore less polluting; on the other side, being the ideal compression ratio of LPG equal to 15:1 or 16:1, its use in a Diesel motor with a higher compression ratio, that is from 18:1 to 20:1 according to the car-maker companies, enhances the combustion.

Instead of LPG, methane can be used as well. However, the use of LPG is preferable because, while the LPG distribution network is vast by this time, the methane distribution network is still insufficient, although under way of strong development.

As an alternative, instead of LPG or methane, the use of another gas, for instance biogas, can be provided.

Nor is it to underestimate the fact that both LPG and methane are definitely less expensive than traditional fuels like petrol and gas oil.

Besides, it is convenient to point out that the kit is applicable to practically every Diesel-cycle motor already existing, both of the traditional type with pump with injectors and of the new "common rail" generation.

The invention will be now described in detail with particular reference to the attached drawings showing preferred and non-limiting embodiments of the invention, wherein:
- Figure 1 is a block schematic view of a supply system of a Diesel motor of a motor vehicle to which a kit according to the invention is applied;
- Figure 2 is a position selector used for controlling the kit according to the invention;
- the Figures from 3 to 6 are charts representing the test results of test drives of a motor vehicle equipped with a Diesel motor to which a kit according to the invention has been applied.

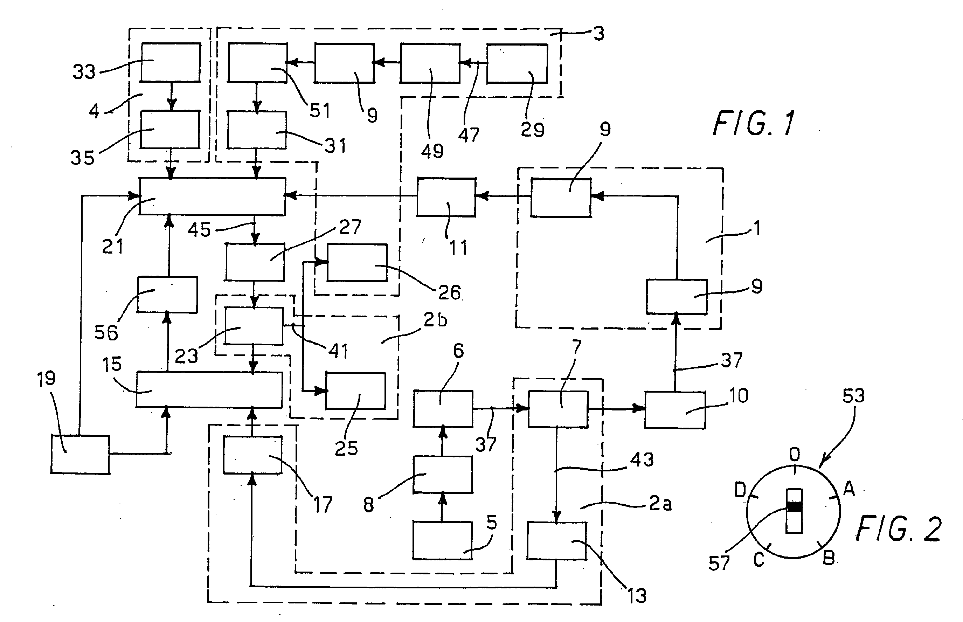

With reference to Figure 1, the supply system of a Diesel motor of a motor vehicle substantially comprises a tank 5 containing gas oil which is pumped by a controlled supply pump 8 to a filter 6 that eliminates the impurities existing in gas oil. Once gas oil has been filtered, it goes then to an injection pump 11 that injects it into the combustion chambers 21, to which ambient air filtered by a filter 19 arrives as well.

In the supercharged motors, a turbocompressor 15, or turbine, that is used for partially recovering the energy owned by the exhaust gases coming from the combustion chamber 21, is also present. A wastegate valve 27 located on the line 45 of the gas exhausted by the chamber 21 and normally closed, that opens when the booster pressure of the turbine 15 reaches a fixed peak value, is further present in order to avoid that an excessive booster pressure can damage the motor.

With reference to the components ideally grouped together in three groups 1,2a-2b,3 inside corresponding dashed lines, the kit according to the invention will be described in detail.

The groups 1,2a-2b,3 are activated by the driver by means of a selector 53, represented in Figure 2, having five positions 0,A,B,C,D. Said selector 53 is installed inside the driver's compartment, preferably in proximity of the steering wheel or in another position, like for instance the ball knob of the gear lever, which is easily reachable by the user while he/she drives.

When the selector 53 is in the position 0, the kit is disconnected and thus the motor works as if the kit was not installed.

When the driver switches the selector to position A, two polarisers 9 are actuated, said polarisers being arranged on the gas oil supply line 37 between the filter 6 and the gas oil injection pump 11.

A polariser 9 is substantially a cylinder having a length of 15 cm and a diameter of 5 cm and enclosing a tube inside which the fuel flows, said tube being coaxial to said cylinder and having a diameter ranging between 1/4 and 5/16 inches.

The polariser 9, operated by the vehicle battery, is essentially constituted by magnetised materials that behave like field generators.

As it is known, the chemical elements and their molecules are surrounded by weak magnetic fields. In liquids and gases, where the molecules are free to move, said weak magnetic forces (van der Waals forces) are effective in the intermolecular dimensions. They originate long molecule chains aggregated in clusters that prevent that oxygen meets with the carbon and hydrogen atoms of the fuel.

However, said clusters can be broken by an applied magnetic field like that provided by a polariser.

For this reason, when gas oil flows through the polarisers 9, the molecular clusters break, thereby fostering a more powerful, complete and regular burst in the combustion chamber where, the supplied heat being equal, a lower quantity of combustible is necessary, which consequently brings down the emissions of carbon oxide, nitrous oxides and hydrocarbons.

In the production-model cars, the use of a polariser is generally not provided. At the most, a single polariser can be mounted on the gas oil supply line after that the car has been purchased (after-market).

On the contrary, the invention provides for the use of at least two polarisers mounted in cascade that contribute to further lower harmful emissions with respect to the case where only one polariser is mounted, and to further decrease consumption.

The maximum number of polarisers that can be connected between the filter 6 and the pump 11 depends on the motor cylinder capacity and on the specific consumption of the above mentioned motor.

Always with reference to the Figure 1, when the driver switches the selector 53 to the position B, the second group of components 2a-2b is activated.

The subgroup of components 2a is constituted by a supply additional line 43 comprising a three-way deflector 7, located downstream of the gas oil filter 6, an electrovalve 13 and an injector 17 injecting gas oil into the motor turbine 15.

Instead, the subgroup of components 2b is constituted by a three-way deflector 23, located between the wastegate valve 27 and the turbine 15, and by an electrovalve 25 leading to the third way 41 created by the deflector 23.

When the selector is in the position B, the opening of the electrovalves 13 and 25 is controlled by a (not shown) electronic control unit 25. When the electrovalve 13, normally closed, opens, a small amount of gas oil, that in the absence of the branch 43 would flow from the gas oil filter 6 towards the injection pump 11, is deviated through the three-way deflector 7 towards the additional supply line 43. Said deviated amount of gas oil arrives to a gas oil injector 17 that injects it into the turbine 15 where it is mixed with air coming from the air filter 19. The turbine 19, rotating at a speed of 100000 rpm, advantageously acts as an air/gas oil mixer. In this way, by exploiting the already existing turbine 15, the use of a mixer is avoided. Then, from the turbine 15 the air/gas oil mixture enters the combustion chamber 21 through an intake manifold 56.

The deviated amount of gas oil, passing on the cold side of the turbine and of the motor, not only acts as an additional fuel, but also as a coolant, because it cools the parts through which it passes, that is the turbine 15 and the intake manifold 56, as well as the delivery air and consequently also the cylinders.

So this additional cooling effect allows to increase the operating pressure level of the motor from 0,7-0,8 bar to 1 bar with the same safety margins, if not even increased. This is made possible thanks to the electrovalve 25 that, when it is opened, prevents the wastegate valve 27, that usually opens at 0,7-0,8 bar, from opening. As a consequence, air that would normally be discharged in atmosphere from said valve 27, is used for increasing the pressure inside the intake manifolds.

The operation of the driving modality "extra" will be now described. As said driving modality is devised for assuring a higher pickup of the motor, it must be used when the rotation speed of the engine is high. As a consequence, the activation of the group of components 3 is realised through two consents: the first consent is given by positioning the selector 53 in the position C, while the second consent is given:
- in the manual modality, by activating a push button 57, provided on the selector 53 itself, that can be pressed when at least 60% of the maximum rotation speed of the motor is reached, for instance 4000 rpm; or
- in the semiautomatic modality, by providing the operation of a microswitch on the accelerator pedal that closes when a predetermined position of the travel of the pedal itself is reached; or
- in the automatic modality, as it will be described next.

If these two consents are present, a block valve 49, normally closed, is opened for letting a small amount of LPG flow from a tank 29 towards an injector 31 that directly injects it into the combustion chamber 21 in liquid phase or as an alternative into the turbine/mixer 15 as in the modality "performance" for gas oil.

Moreover, the electrovalve 26 is opened for increasing the amount of air admitted into the motor under pressure that must be directly proportional to the increase of combustible injected for maintaining the stoichiometric ratio and assuring a better performance. As an effect of the electrovalve 26, the manifold pressure varies from 1 bar to 1,1-1,2 bar.

As it has already been previously explained, the lower compression ratio necessary to LPG coupled with the use in a Diesel motor working with higher compression ratios, allows to obtain a more powerful burst.

The tank 29, approved according to the existing laws, has small dimensions and can be installed in various parts of the car, like for instance the boot, or in correspondence with the lower part of a back seat or in place of the spare wheel.

Also in this additional supply line 47 one or more polarisers 9 of the above described type can be inserted between the injector 31 and the tank 29 in order to improve the combustion of LPG and, as an option, a vaporiser 51 for transforming LPG from the liquid phase to the gaseous phase.

As an alternative to LPG, it is also possible to use another gas like biogas.

In the two configurations "economic" and "performance", corresponding to the selector positions A and B, it can also be provided for the use of a heat exchanger 10 that, drawing heat energy from the motor coolant circuit, will provide to heat gas oil on the delivery before said gas oil enters the pump.

For increasing the motor performance in the three above mentioned modalities, it can be further provided an additional injecting system 4, for instance aliphatic paraffins-based or water-based contained inside a tank 33, the vapours of which can be injected into the combustion chamber 21 through an injector 35 with the appropriate calibrations working for suction or through exploitation of the turbo pressure.

It is convenient to point out that the groups 1,2a-2b,3 can be mounted one by one, as a combination of two of them, or simultaneously, according to the user's needs.

In case the kit provides for a lower number of groups of components, either no action will be associated to some selector positions or the selector will have a lower number of positions.

The operation of the kit has been described with reference to a manual operation of a selector by the driver. However, a fully automatic operation, that will be now described, is also possible, said operation being selectable by positioning the selector 53 in D.

By sensing with known techniques, for instance through a sensor arranged on the flywheel, the motor rotation, a (not represented) programmed electronic control unit is controlled for instance in this way:
- for a motor rotation up to 1500 rpm the group of components 1 is activated;
- for a motor rotation ranging between 1500 rpm and 4000 rpm the group of components 2a-2b is further activated;
- for a motor rotation beyond 4000 rpm the group of components 3 is further activated.

Obviously, the rpm values according to which the three groups are connected are merely indicative, since they can be controlled through the electronic control unit.

Moreover, the electronic control unit is programmed for disconnecting the groups in an inverse sequence with respect to the described one as the motor rotation decreases.

The injectors 17,31 and 39 are equipped with interchangeable nozzles respectively. The adjustment and the calibration of the injected fluid will then depend on the nozzle apertures that can have different dimensions and will be installed according to the type of performance required by the driver. As an alternative, electroinjectors controlled by the electronic control unit can be used for assuring that the stoichiometric ratio remains constant for whatever rotation speed.

A safety key can be further provided on the selector 53 in order to block the selector in the position 0 for avoiding that unauthorised persons can use the kit according to the invention.

The test results obtained by the inventor using the kit according to the invention will now be described.

For the road tests a MERCEDES BENZ 250 TD car has been used. In the test case the kit has been set for sequentially working in the positions A,B and C; therefore, respectively, the group of components 1, the group of components 1,2a-2b and the group of components 1,2a-2b,3 have been sequentially activated.

It must be clarified that four polarisers have been used in the group 1.

The use of an inertial accelerometer has allowed to obtain indirectly the power and torque values developed by the car under test in the three selected positions.

In order to measure consumption, the litres necessary for restoring the condition of full tank, after having travelled same routes at the same speed, have been calculated.

Air emissions have been controlled by means of an exhaust gas analyser and of an opacimeter.

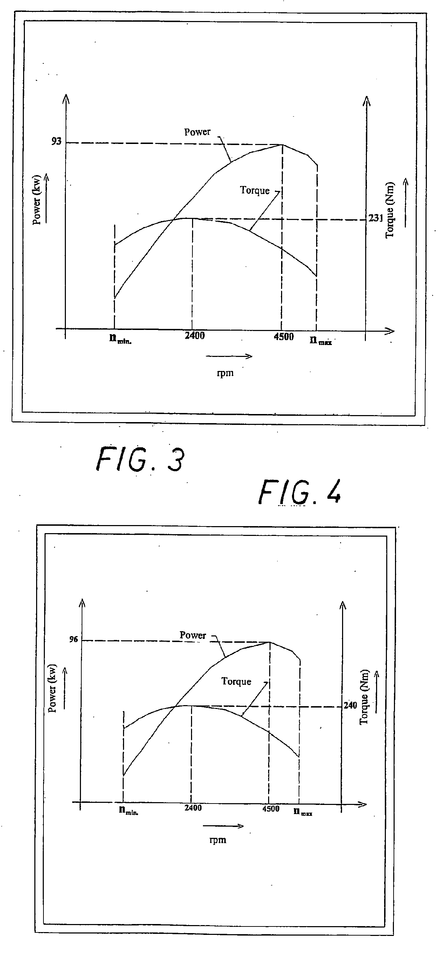

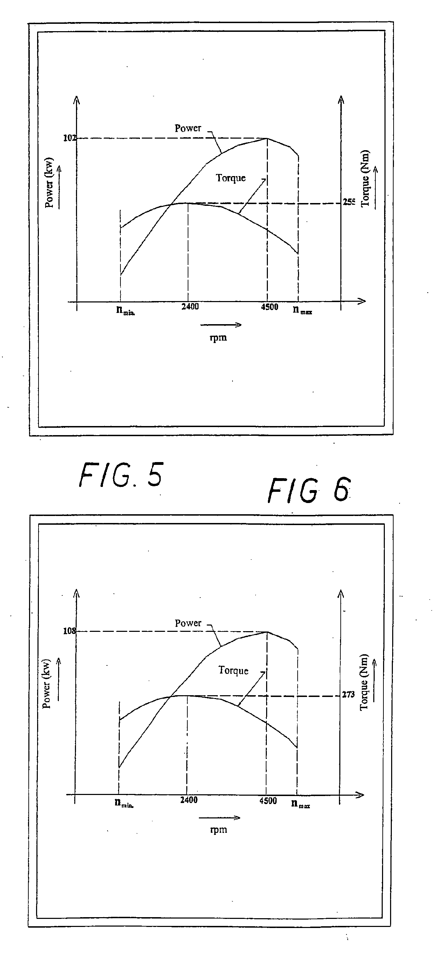

In the Figures 3,4,5 and 6 the power and torque curves are shown as a function of the motor rotation, expressed in rpm, in the conditions of standard motor (without kit) corresponding to the position 0, and of selector in the positions A,B and C respectively.

As it can be observed by comparing the Figures 3,4,5 and 6 the maximum power and torque increase as the different group of components 1,2a-2b,3 are connected.

It is particularly significant the decrease of the harmful air emissions. In fact, regardless of the selected working modalities of the kit, the emissions of solid particulate decrease of 40-50%, those of carbon oxide of 30-40% and those of nitrous oxides of 20-30% with respect to the valued declared by the car-maker company.

Also from the point of view of consumption remarkable improvements are obtained. In fact, also using the kit "extra", which is the most costly in terms of consumption, a fuel consumption lower than that of the standard motor occurs. In detail, the urban consumption without kit has resulted to be of 9,6 I every 100 km travelled; with the kit activated by positioning the selector in A of 7,7 I every 100 km; with the selector positioned in B of 8,6 I every 100 km; and, finally, with the selector positioned in C of 9,1 I every 100 km.

Although the invention has been described with reference to a Diesel motor of a motor vehicle, it will be in any case possible for the expert in the field to provide for the installation of the kit according to the invention also in another apparatus of a different type containing a Diesel motor, like for instance heavy transport means, generator sets, cogeneration systems and so on.

## Claims

1. Kit for improving the performance, decreasing the consumption and bringing down the polluting emissions of an internal combustion Diesel-cycle motor, said motor being provided with a main supply line (37) constituted by at least a gas oil tank (5) and by a pump (11) for injecting said gas oil into a combustion chamber (21) of the motor, and of a turbocompressor (15) for recovering at least partially the energy owned by the exhaust gases coming from said combustion chamber (21), said kit comprising:
- a first group (1) of components (9) able to be inserted into said main supply line (37);
- a second group (2a-2b) of components (7,13,17,23,25) realising a first gas oil additional supply line (39), said second group comprising first means (23,25) for increasing the operative pressure of the turbocompressor (15);
- a third group (3) of components (9,23,26,29,31,49,51) realising a second additional supply line (47) of combustible gas, said third group comprising second means (23,26) for increasing the operative pressure of the turbocompressor (15); and
- control means (53) for activating simultaneously or alternatively said first, second and third group of components.

2. Kit according to claim 1, **characterised in that** said first group of components is constituted by at least two magnetic polarisers (9) interposed between said tank (5) and said pump (11).

3. Kit according to claim 2, **characterised in that** between said polarisers (9) and said tank (5) a heat exchanger (10) for heating gas oil is further provided.

4. Kit according to claim 1, **characterised in that** said second group of components is interposed between said tank (5) and said turbine (15) and comprises means (7) for deviating an amount of gas oil onto said first additional supply line (39), a first electrovalve (13) that, when it is opened, lets said amount of gas oil pass, and an injector (17) injecting said amount of gas oil into said turbocompressor (15).

5. Kit according to claim 1, **characterised in that** said first means (23,25) for increasing the operative pressure of the turbocompressor are positioned between said combustion chamber (21) and said turbocompressor (15) and comprise a three-way deflector (23), located upstream of said turbocompressor, and a second electrovalve (25) located downstream of said deflector (23).

6. Kit according to claim 1, **characterised in that** said second supply line (47) comprises at least a combustible gas tank (29), a block valve (49), and an injector (31) injecting an amount of gas directly into the combustion chamber (21).

7. Kit according to claim 6, **characterised in that** said second supply line (4) further comprises at least a polariser (9).

8. Kit according to claim 6 or 7, **characterised in that** said second supply line (47) further comprises a vaporiser (9) for transforming combustible gas from the liquid state to the gaseous state.

9. Kit according to claim 6, **characterised in that** said combustible gas is a gas chosen in the group comprising: liquefied petroleum, methane, biogas.

10. Kit according to claim 1, **characterised in that** said second means (23,26) for increasing the operative pressure of the turbocompressor are located between said combustion chamber (21) and said turbocompressor (15) and comprise a three-way deflector (23), located upstream of said turbocompressor (15), and a third electrovalve (26).

11. Kit according to claim 1, **characterised in that** said control means comprise a manual selector (53) provided with a number of positions (0,A,B,C,D) at least equal to that of the groups of components (1,2a-2b,3) that can be activated.

12. Kit according to claim 11, **characterised in that** said selector (53) is provided with a push button (57) for controlling the gas supply through said second additional line (47).

13. Kit according to claim 11, **characterised in that** said selector (53) is provided with safety means for preventing said kit from being activated.

14. Kit according to claim 11, **characterised in that** said selector (53) controls a programmable electronic control unit.

15. Kit according to claim 11, **characterised in that** said electronic control unit senses the motor rotation speed and controls the activation of said first (1), second (2a-2b) and third (3) group of components according to said motor rotation speed.

16. Kit according to any one of the preceding claims, **characterised in that** a supply system (4) of aliphatic paraffins or water vapours is further provided.

17. Internal combustion Diesel-cycle motor comprising a kit according to anyone of the preceding claims.
